# EUROPEAN PATENT APPLICATION

(11) **EP 1 291 074 A1**
(43) Date of publication of application: **12.03.2003**
(21) Application number: 01810859.7
(22) Date of filing: 07.09.2001
(51) Int. Cl.: B01J 19/00, B29C 45/44

(54) **Reaction block for parallel synthetic chemistry and vessel therefor**

(71) Applicant: F. HOFFMANN-LA ROCHE AG, 4070 Basel (CH)
(72) Inventor: Voegelin, Dieter, 4450 Sissach (CH); Bär, Roman, 4132 Muttenz (CH); Mueller, Claus, 68220 Hegenheim (FR)
(74) Representative: Ventocilla, Abraham

(57) **Abstract**

A reaction vessel (1), particularly for use in parallel synthetic chemistry, is characterized by an inner structure, namely a reaction chamber (3) and a discharge channel (5) which are interconnected. The interconnection preferably consist of a connection channel (14) between the bottom of the reaction chamber (3) and the discharge channel (5) so that almost any liquid in the reaction chamber (3) can be removed through the discharge channel (5). The connection channel (14) may be mould by an extension hinged to the core moulding the reaction chamber (3), so that the reaction vessel can be conveniently manufactured by injection moulding. A reaction block particularly for use with these reaction vessels comprises a closure means covering the open ends of the discharge channel (5) and the reaction chamber (3) of at least two of the reaction vessels. By guiding means the closure means is directed to perform a generally linear movement in moving from the opeing to the closing position, and during this movement, to move towards the open ends of the vessels in order to close them with a force withstanding also an overpressure possibly developing within the vessel.

## Description

The present invention relates to a reaction vessel for use in parallel synthetic chemistry and other chemical application where a multiplicity of chemical reactions has to be performed in small reaction medium volumes. The invention further relates to a reaction block comprising such vessels.

Combinatorial chemical synthesis implies performing simultaneously a multitude of chemical reactions. Often the problem arises to separate and characterize the reaction products. Therefore, reactor vessel arrays have been developed, where in each vessel one specific reaction or sequence of reactions is performed on one or possibly a small number of educts, so that one or a small number of products are obtained, which may more easily be separated or examined. This type of synthesis is better named "parallel synthetic chemistry" due to the relatively large number of reactions performed in parallel.

For high performance, synthesizers are required enabling chemical synthesis in solution, on solid phase or in so-called "tea-bags" etc. A known type of synthesizer is characterized by the following features:
- a dispensing system using one or more dispensing needles (these liquid handling systems originate from biological screening or diagnostic technique);
- a reactor block comprising a number of reactor vessels which allow performing a manifold of chemical reactions at varying temperatures, with shaking and under inert gas; and
- a computer running a specialized software package which allows the programming and control of the individual synthesis steps.

Most known reactor blocks comprise a multitude of small reactor vessels which are closed on top, contain an inert gas atmosphere and are accessible through the closure using a needle. Liquids are added and removed through one and the same access.

Less often reactor vessels are used which are operated from the bottom using additional valves.

Hence, the known reactor vessels are characterized either by a rather complicate access or a complex structure making them expensive.

One object of the present invention, therefore, consists in providing a reaction vessel which can be manufactured more easily and less costly.

A further object of the invention consists in proposing a reaction vessel whose contents can be exchanged more conveniently.

Another object is to propose a reaction block, which can be used more conveniently, particularly within an automatized system, and is capable to accept a reactor vessel array.

A reaction vessel satisfying at least one of the two first-mentioned objects is defined in claim 1. Preferred embodiments of the vessel and reaction blocks, particularly reaction blocks fulfilling the third object, comprising such vessels are defined in the following claims.

Hence, the reaction vessel according to the invention consists of plastic material and is preferably made by injection moulding. It provides a reaction space with an exit connected to a discharge channel. By applying underpressure to the discharge channel, the content of the reaction space, particularly a liquid, can be withdrawn. Preferably, the exit of the reaction space to the discharge channel is closed by a frit so that the withdrawn liquid is filtered. In this configuration, it is possible to use e. g. loose beads of a solid substrate, e.g. a resin, whereon the reactive component is immobilized.

For use with the vessel according to the invention, a reaction block has been developed suited to receive a number of the reaction vessels. The block has been specifically designed in view of automatization and ease of use. In this context, the closing mechanism has been realized by a movable closure means which is guided by guiding means of the block. The closure means extends over a subset of the vessels contained in the block, e. g. one row, and comprises means for enabling access to the openings of the reaction vessels and for closing them, e.g. openings in the closure means alignable with the openings of the reaction vessel and sealing surfaces for closing the reaction vessels.

Furthermore, the guiding means comprise redirecting means, like gates (grooves) or a lever mechanism interacting with corresponding means provided at the closure means. The redirecting means convert an essentially linear movement of the closure means at least near the closing end position in a movement towards the openings of the reaction vessels in order to close them. Preferably, the closure means is further urged against the openings to improve the tightness even if overpressure develops in the vessels.

The invention will be further explained on the basis of an exemplary embodiment with reference to the drawing:
- Fig. 1a: A cut through a reactor vessel according to I-I in Fig 1b;
- Fig. 1b: A top view on reactor vessel;
- Fig. 1c: An enlarged partial cut according to I-I in Fig. 1b, also showing a withdrawal needle tip;
- Fig. 2: View of a reactor block, exploded;
- Fig. 3: Top view on the reactor block;
- Fig. 4: Section according to line A-A in Fig. 3
- Fig. 5: Section according to line B-B in Fig. 3;
- Fig. 6: Section according to line C-C in Fig. 3;
- Fig. 7: Side view on the reactor block, showing the locking mechanism, opened position, according to arrow D in Fig. 3; and
- Fig. 8: as Fig. 7, closed position, according to arrow E in Fig. 3.

### Reaction Vessel

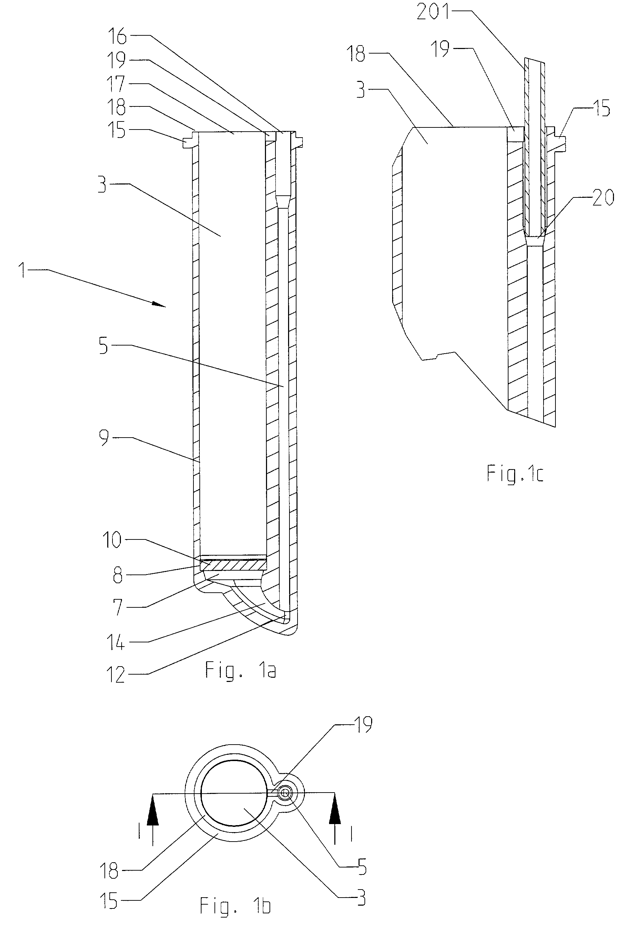

Fig. 1a shows a longitudinal section through a reaction vessel 1, Fig. 1b a top view on it. It consists of a polymeric material which is inert under the conditions of the intended reactions. Preferred materials are polypropylene or a poly-co-ethylene-tetrafluoroethylene, particularly the one marketed under the tradename TEFZEL (DuPont).

The vessel 1 comprises a reaction chamber 3 and an discharge channel 5 beginning at the bottom of reaction chamber 3. At the inlet 7 of the discharge channel 5, a seat 8 is provided in the wall 9 of the reaction vessel 1. In the seat 8, a frit 10 is placed which constitutes the bottom of the reaction chamber 3 and serves as a filter during discharging the reaction chamber.

The discharge channel 5 is arranged in parallel to the reaction chamber 3, and a connection channel part 14 which has a bent, tapered shape with the narrow end towards the lower end 12 of the discharge channel 5, connects the latter with the reaction chamber. The discharge channel's exit 16 and the upper opening 17 of the reaction chamber 3 are located at the upper rim 18 of the reaction vessel.

Near the upper rim 18, the reaction vessel has a collar 15 serving as an abutment when the vessel is inserted in a reaction block as explained further below.

The opening 17 and the exit 16 are interconnected by a channel or groove 19, which equalizes any pressure difference between the two spaces of the reaction vessel 1. As shown in Fig. 1c, when the needle 201 for withdrawing the liquid contents of the reaction vessel 1 through the channel 5, the tip of the needle is in sealing contact with a tapering portion 20 of the discharge channel 5. Thereby, the channel 19 is disconnected from the discharge channel, and by applying underpressure to the discharge through the needle 201, the reaction vessel can be emptied.

The reaction vessel may be conveniently manufactured by injection moulding. The reaction chamber 3 and the connection 14 are shaped by a core with a hingedly attached extension for the connection 14. The vertical part 12 of the discharge channel 5 is shaped by a second core. In the closed state of the injection moulding tool, the cores are injected into the moulding space, the extension abutting on the end of the second core whereby the mould part for the hollow interior of the discharge conduit is constituted.

After injection moulding, the cores are withdrawn. Therefor, the extension of the first core makes a rotational movement on its hinge. The removal is facilitated by the significantly tapered shape of the connection 14. For even better removal of the cores, the walls of the reaction chamber and/or the discharge channel 5 may be slightly, even insensibly, inclined so that its cross section increases towards the opening 17 resp. the exit 16.

As such moulds, even including the mentioned cores, are essentially known to the known skilled in the art, a detailed description with reference to figures is deemed unnecessary and, therefore, not included in the present specification.

From what is explained above, it is evident that the reaction vessel may be manufactured in series at a low price.

With regard to the application of the vessel, another advantage consists in that if the reaction is terminated, the liquid contents of the reaction chamber 3 can be sucked off through the frit 10 and the discharge channel 5 by applying vaccuum to the exit 16. In the solid-liquid reaction arrangement most often used in combinatorial chemistry, the reaction partners immobilized on a solid support are retained in the reaction chamber 3 as the "filter cake" on the frit 10.

In case the frit 10 is jammed, it is possible to blow an inert gas, e. g. argon, in the reverse direction through the frit 10 whereby its permeability can be restituted. The injection of gas may also be used for stirring the contents of the reaction chamber.

It is further to be noted, that by experiments, it has surprisingly found that the reaction vessel may even withstand significant inner overpressure. This allows to perform reactions even under overpressure without a venting provision, e. g. to work at an elevated temperature with respect to the temperature during filling.

Typical dimensions of the reaction vessel 1 are:

| | | |
|---|---|---|
| Cross-sectional area of the reaction chamber | | 10 to 1000 mm² |
| | preferably | 75 to 120 mm² |
| Length of reaction chamber | | at least 10 mm |
| | preferably | 20 to 200 mm |
| Cross-sectional area of the discharge channel | | at least 0.8 mm² |
| | preferably | 0.8 to 25 mm² |

Generally, the cross-sectional area of the discharge channel is significantly smaller than the one of the reaction chamber.

### Reactor block

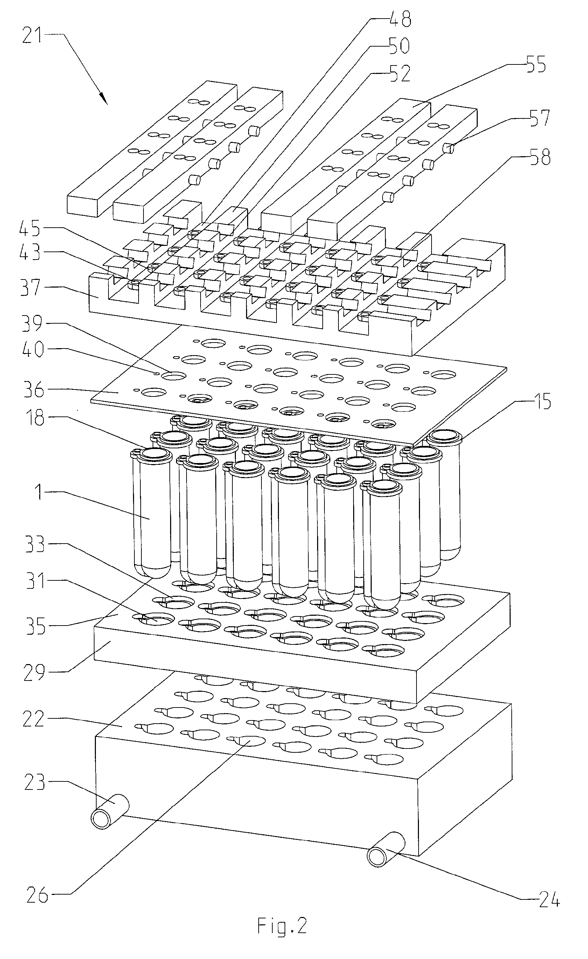

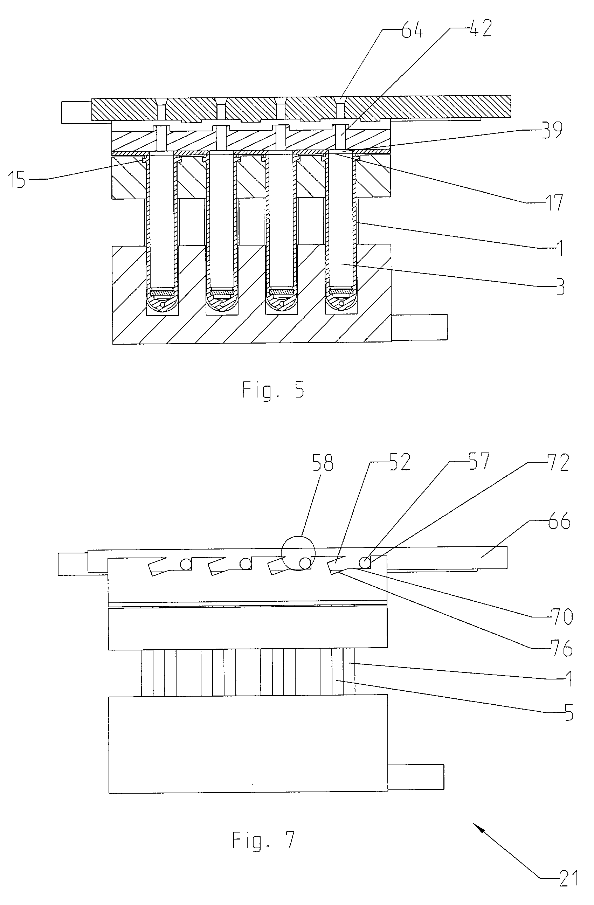

Fig. 2 shows an exploded view of a reactor block 21 containing 24 reaction vessels 1. The block 21 consists of a basis 22 with an integrated conduit for temperature control (connectors 23 and 24). Heat is exchanged by air between the reaction vessels 1 and the walls of receiving sites 26 for the vessels in the basis 22. For an efficient thermal contact, the sites 26 are shaped closely similar to the exterior surface of the vessels 1. The temperature control (normally heating), however, is essentially restricted to the lower part of the reaction vessel 1 (cf. Fig. 4) in order that vaporized liquid may condensate in the cooler upper part of the reaction vessels and flow back into the reaction volume proper above the frit (reflux condensation).

The vessel holder 29 is arranged above the basis 22 and held by an appropriate, adjustable means (not shown) so that the vessels extend into the basis 22 without touching the bottom of their receiving sites 26 in order to compensate for thermal expansion and manufacturing tolerances.

The seats 31 are provided each with a circumferential shoulder or depression 33 for receiving the collar 15 of a reaction vessel 1. The upper rims 18 project a little bit above the upper surface 35 of the holder 29. Being arranged outside of the reaction chamber's wall, the discharge channel 5 represents at the same time a positioning means allowing to insert the reaction vessels 1 in one orientation only so that the exits of the reaction chambers and the discharge channels are always and mandatorily in the same position. This is important for the use of the reactor block with automated handlers, e. g. synthesizers or analyzers.

On top of the vessels 1, a sealing foil or plate 36 and a slider gate plate 37 is placed, the slider gate plate 37 being firmly pressed against the holder 29 so that preferably a gas-tight sealing, at least, however, a fluid-tight sealing between the seal 36, the rim 18 of the vessels 1 and the slider gate plate 37 is obtained.

The seal 36 and the slider gate plate 37 each provide for each vessel two corresponding holes, namely a first 39 resp. a second 42 for the upper opening 17 of the reaction chamber 3 and a third 40 resp. a fourth 43 for the exit 16 of the discharge channel 5. The upper ends of the holes 42, 43 in the slider gate plate 37 are surrounded by a collar 45 whose upper rim serves as a sealing surface as will be explained below. Another advantageous effect of the collar is that it avoids the flowing in of any matter spoiled in the slot 48 into the open reaction vessels.

The reaction vessels are arranged in six rows of 4 vessels each (corresponding to an ancient 24 well plate). For each row, the slider gate plate 37 provides a slider slot 48. The walls 50 of the slots 48 contain the gates 52, i.e. guiding grooves or channels for the closure sliders 55 (four of six necessary are shown).

The closure sliders 55 are shaped so that they slide neatly within the slots 48. Their lateral faces comprise pins 57 to be slidably registered in the gates 52. For assembly purposes, the gates 52 are open at one end 58 so that the pins 57 of the sliders 55 may be inserted in the gates 52 from above.

Fig. 4 shows in a sectional view some aspects mentioned above more clearly with, however, the reaction vessels 1 merely schematically shown: In the basis 22, the conduits 60 for the temperature control medium are arranged. The vessels 1 are held by the holder 29 in a merely pending manner and extend into the receiving sites 26 of the basis 22 without touching the bottom 62 thereof. The seal 36 is pinched between the slider gate plate 37 and the upper rim 18 of the reaction vessels 1 whereby the collars 15 of the vessels 1 are pressed down in the depressions 33.

The exits 16 of the discharge channels 5 and the open upper ends 17 of the reaction chambers 3 are accessible through the holes 40 resp. 39 in the seal 36 and the holes 43 resp. 42 in the slider plate 37. Depending on the position of the sliders 55, the holes 42, 43 are accessible from the exterior through the holes 64 resp. 65 (slider 66 to the left), or closed altogether by the slider (see slider 67 to the right) as explained more in detail below.

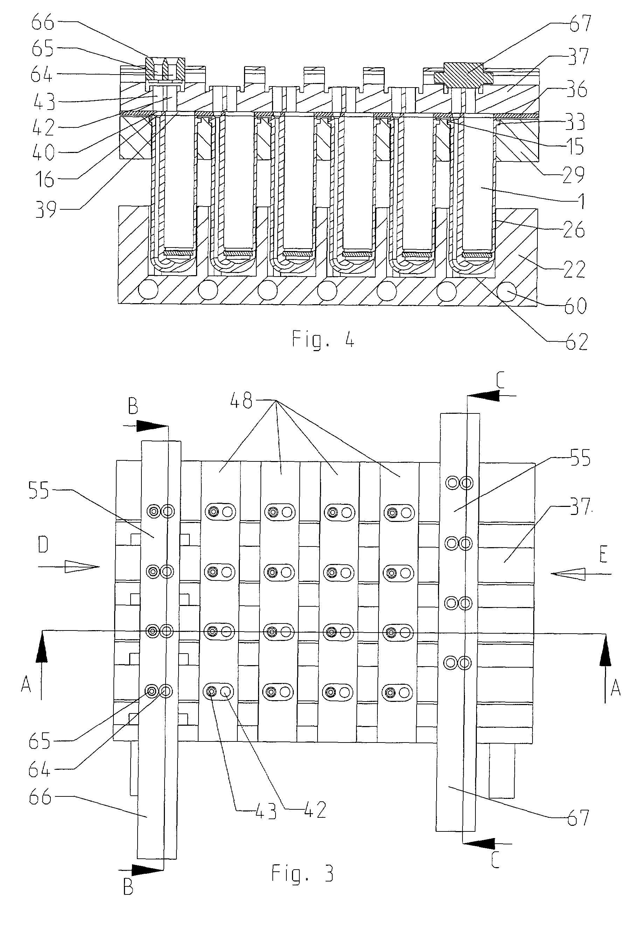

Fig. 3 shows a top view on the reactor block, particularly the slider gate plate 37. For the sake of simplicity, the middle four slider slots 48 are shown without sliders. The slider 66 at the left side is in open position allowing access to the reactor vessels below by registering its holes 64, 65 with the holes 42, 43 in the slider gate plate 37. The slider 67 on the right side is in the closed position, where the reaction vessels below are almost hermetically sealed, e. g. for performing the reactions.

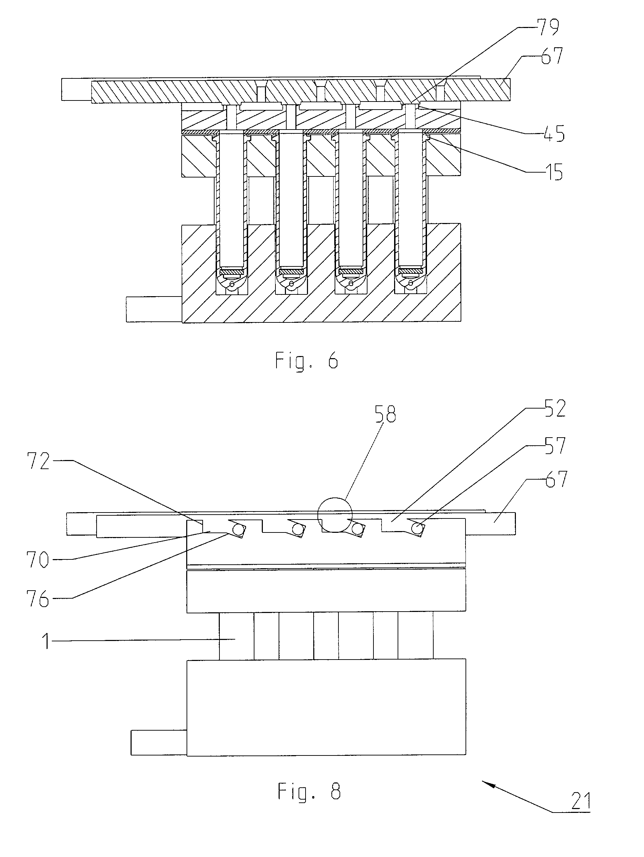

As shown in Figs. 5 and 6, the slider 66 is not only moved along slot 48, but abides in a slightly elevated position due to the pins 57 resting on the front surface part 70 of the gates 52. At the same time, in abutting against the front wall 72, the movement of the slider 66 is stopped in the opened postion. The holes 64, 65 are aligned, and e. g. by a syringe, a medium can be injected into the reaction vessel through holes 64, 42, 39 and the open end 17 of the reaction chamber 3, or withdrawn (not shown) through the holes 65, 43, 40 and the exit 16 of the discharge channel 5 (cf. Fig. 4).

For the withdrawal of reaction medium, the easiest way is to apply underpressure or vacuum. Therefore, the needle of a syringe has a diameter equal or slightly bigger than the diameter of the discharge channel 5 near the exit 16. When the front end of the syringe needle is moved into the discharge channel, a tight seal between the needle and the wall of the discharge channel 5 is established. For this purpose, the discharge channel 5 may have a conical part near the exit 16 narrowing into the channel.

There may also be a step delimiting a part of wider diameter extending to the exit of the discharge channel 5. Particularly if a means like a small tube with a transversely cut end is used, this end, then, may be pressed against the step with a sealing effect.

Of course, the holes 43 and 65 (and 42 and 64) have diameters bigger than the conducting means (tube, syringe needle) used to inject or withdraw reaction medium in order to guarantee a free passage of the means.

Figs. 7 and 8 show the closed configuration. The slider 67 is moved to the rear position. During this movement, the pins 57 had been forced to move downward along the rear part 76 of gates 52, and therefore the slider 67 as well. Thereby, the end phase of the longitudinal rearward movement of the sliders 55 in the slots 48 is transformed in a movement towards the reaction vessels 1, and, finally, in a force pressing the lower surface 79 of the sliders 55 (exemplarily, slider 67) against the collars 45.

It is to be noted that by this arrangement, a simple, e. g. pneumatic or solenoid, actuator providing a sufficient powerful, yet only linear movement, may be used for moving the sliders from the open to the closed position and vice versa, and even operating by hand is significantly facilitated.

As this closing movement requires still a minimal lateral movement over the collar 45, the sliders 55 have a smooth, plane sealing surface 79 in the respective parts of their lower surface. Preferably, the sliders consists in their totality of a suitable polymeric material, e. g. a fluorocarbon type. As they may as well be produced by injection moulding, possibly with finishing (smoothing) treatment of the sealing surface 79, they may be produced at low price allowing to dispose them if used.

Due to the fact that the sliders 55 are pressed with a rather elevated force against the openings 42, 43, the technique of performing reactions can be simplified: According to the prior art, vaporized solvent has been refluxed in the upper, cooler part of the reaction vessels. Solvent not condensated could escape by a venting provision, normally connected to an inert gas source. In using the reactor block of the present invention, in contrast, the reaction vessel may be simply kept closed, i. e. the reaction is executed under overpressure. By experiment, it has been found that the whole arrangement including the plastic reaction vessel can withstand the developing pressures without problems under normal conditions.

Of course, during exchanging the reaction medium, an inert gas blanket may be provided if necessary.

From the exemplary embodiment set forth above, the one skilled in the art is able to derive numerous variants without leaving the scope of protection which is intended to be solely defined by the claims. Some variations one may think of are:
- The vessels may consists of other materials, like metal, ceramics, or even glass. Due to the rather simple structure, even with these materials, mass production methods might be used for producing the vessels.
- The sealing plate or foil 36 may also be waived if already the contact between the reaction vessel and the lower surface of the gate plate 37 provides a sufficient tightness.
- The sliders may be connected to the gate plate by another mechanism, for example using levers, for transforming the movement of the sliders into one urging the sliders 55 against the openings 39, 40, though the solution using pins and gates has proven to be the most reliable due to its simplicity.
- The number of vessels contained in a reactor block may be varied as needed. Particularly preferred are arrangements adapted to the configuration of well plates (e. g. 96 wells, 384 wells) so that by a roboter, whole rows of the well plate may be transferred to the reactor's vessels with only simple movements.
- The connection channel 14 may provide the ampler orifice to the discharge channel or have the narrowest cross-section inbetween if the moulding core is to be retracted through the discharge channel or both the reaction chamber and the discharge channel. However, in the exemplary embodiment, the rather small diameter of the discharge channel renders it almost impossible to withdraw the moulding core through the connection channel.
- The collar 45 may be omitted. Preferably, then, the sealing surfaces are slightly elevated with respect to the surrounding lower surface of the sliders 55 in order to concentrate the closing pressure to the holes 43, 42.
- The preferred arrangement of one pair of pins 57 per vessel which helps to secure a tight seal, may be varied in using more or less pins and gates. Particularly if less pins are provided, and the sliders are of some flexibility, additional measures have to be applied for securing a tight seal. Such means may be a rigid back, for instant of metal.
- The hollow interior parts of the reaction vessel may have other cross sections than circular, e.g. tetragonal, hexagonal or elliptic.
- There may be no depression for receiving the collars of the reaction vessels, so that the collars are applied flat to the surface of the plate comprising the seats.
- The reaction vessel may be useful and used in any application, where exchange of a reaction chamber's contents by sucking off is needed. This includes individually performing reactions in a single reaction vessel.

Instead of a groove for the discharge channel 19, other means for equalizing the pressure may be provided, e.g. a hole. A pressure balancing provision may even be entirely omitted.

## Claims

1. A reaction vessel (1) for performing chemical reactions simultaneously, particularly for use in parallel chemical synthesis or analysis, **characterized in that** it consists of a material, particularly a polymeric material, shapable injection moulding and comprises a reaction chamber (3) and a discharge channel (5), the reaction chamber and the discharge channel each having an open end (17, 16) and extending from its open ends with constant or decreasing cross section, so that the reaction chamber and the discharge channel may be moulded by cores which can be retracted through the respective open ends, and that the discharge channel is connected to the reaction volume of the reaction chamber intended for receiving the reaction medium during the reaction.

2. A reaction vessel (1) according to claim 1, **characterized in that** the reaction chamber (3) has a mean cross-sectional area of from 10 mm² to 1000 mm², preferably from 75 mm² to 120 mm², and the discharge channel (5) of at least 0.8 mm², preferably from 0.8 mm² to 25 mm², and/or that the vessel has a length of at least 10 mm, preferably from 20 mm to 200 mm.

3. A reaction vessel (1) according to one of claims 1 to 2, **characterized in that** the discharge channel (5) is connected to the reaction chamber (3) by a connection channel (14), the connection channel having its orifice into the reaction chamber (3) near or in the bottom of the reaction chamber so that the reaction medium in the reaction chamber may be withdrawn through the connection channel, and that the connection channel is shaped such that cores molding it can be retracted through at least one of its ends and either the reaction chamber or the discharge channel or both.

4. A reaction vessel (1) according to claim 3, **characterized in that** the connection channel (14) begins essentially at the bottom of the reaction space of the reaction chamber (3) and leads to the discharge channel (5) with constant or preferably decreasing diameter, so that the core molding it may be withdrawn through the reaction chamber (3).

5. A reaction vessel (1) according to one of claims 1 to 4, **characterized in that** the connection between the reaction chamber (3) and the discharge channel (5) is closed by filtering means (10), preferably a frit, so that reaction medium exiting from the reaction chamber (3) into the discharge channel (5) has to pass the filtering means.

6. A reaction vessel (1) according to claim 5, **characterized in that** the filtering means (10) constitutes a delimitation of the reaction chamber, preferably the bottom.

7. A reaction vessel (1) according to one of claims 1 to 6, **characterized in that** the discharge channel (5) extends essentially in the wall of the reaction chamber (3) or on the exterior surface thereof.

8. A reaction vessel (1) according to one of claims 1 to 7, **characterized in that** it essentially consists of thermoplastic material, preferably of polypropylene or a fluorinated polymer like an ethylene-tetrafluoroethylene copolymer.

9. A method for manufacturing the reaction vessel (1) according to claim 8, **characterized in that** it is done by injection moulding of polymer material, wherein the interior of discharge channel (5) and the reaction chamber (3) are shaped by two cores which are moved into the mould before injection and retracted during opening the mold, that the core shaping the reaction chamber (3) bears a movable extension at the end forming the bottom of the reaction chamber, and that the extension touches the core shaping the discharge channel (5) when the cores are moved into the mould, in order to mould the connection channel (14) between the reaction chamber (3) and the discharge channel (5).

10. Use of the reaction vessel (1) according to one of claims 1 to 8 for performing reactions under overpressure, the overpressure being preferably generated by closing the vessel and increasing the temperature.

11. Use of the reaction vessel (1) according to one of claims 1 to 8 in an arrangement of at least 2, preferably an integer multiple of 24, reaction vessels for performing in the vessels chemical reaction in parallel.

12. Use according to claim 11, wherein agents are removed by applying underpressure to the discharge channel (5) so that said agents are sucked off through the discharge channel.

13. A reactor block (21) for performing a multiplicity of chemical reactions simultaneously, particularly for use in in parallel synthetic chemistry, and comprising at least two rows of at least two seats (31) for reactions vessels (1), the reaction vessels having each at least an inlet (17) and an outlet (18) orifice and being preferably reaction vessels according to one of claims 1 to 8, **characterized in that** the reactor block comprises first closure means (55) being each movable in a sliding manner over the inlets and outlets of a number, preferably a row, of reaction vessels situated in the seats into at least one opening position where openings (64, 65) in the first closure means allow access to the inlets and/or outlets, and into a closed position where the inlets and outlets are closed by surface parts (79) of the first closure means resting on the inlets and outlets.

14. A reactor block (21) according to claim 13, **characterized in that** the first closure means (55) are each guided in guide means (48) and that the guide means are operably engaged with the first closure means so that the first closure means are pressed against the inlets and outlets of the reaction vessels, when they are moved to the closed position.

15. A reactor block (21) according to claim 14, **characterized in that** the guide means are provided with at least one pair of gates (52), preferable one pair of gates per reaction vessel seat, the gates of a pair being arranged essentially adjacent to opposing sides of the respective first closure means (55) and a pin (57) of the first closure means extending into each gate, and that the gates (52) guide the pins in a plane essentially parallel to the inlets and outlets of the reaction vessels while the first closure means is near the opening position, and guide the pins in a direction inclined to this plane near the closing position of the first closure means so that the first closure means if moved to the closing position, is moved towards the inlets and outlets of the reaction vessels in order to close them.

16. A parallel reaction assembly comprising a reactor block (21) according to one of claims 13 to 15 with reaction vessels (1) according to one of claims 1 to 8 located in the seats (31) of the reactor block.

17. Use of the parallel reaction assembly of claim 16 for simultaneously performing in each vessel (1) in the reactor block (21) a chemical reaction.
